# EUROPEAN PATENT APPLICATION

(11) **EP 2 863 348 A1**
(43) Date of publication of application: **22.04.2015**
(21) Application number: 14189050.9
(22) Date of filing: 15.10.2014
(51) Int. Cl.: G06Q 10/08, G06Q 30/00, G06Q 30/06

(54) **Device for determining counterfeit and method thereof**

(30) Priority: 15.10.2013 KR 20130122338
(71) Applicant: Penta Security Systems, Inc., Seoul 150-949 (KR)
(72) Inventor: Seok Woo, LEE, 100-835 Seoul (KR); Sim, Sang Gyoo, 156-723 Seoul (KR); Kim, Duk Soo, 120-866 Seoul (KR)
(74) Representative: Zimmermann, Tankred Klaus

(57) **Abstract**

There are provided a device for determining a counterfeit and a method thereof. The device for determining a counterfeit includes a certification information receiving unit configured to receive certification identification information including at least one piece of certification chip identification information, product identification information, and certification verification information of a verification target product and state information of a device for performing genuine product certification from the device for performing genuine product certification, and a counterfeit determining unit configured to determine a counterfeit based on the received certification identification information or the state information of the device for performing genuine product certification. Therefore, genuine product certification of the verification target product is verified. As a result, it is possible to effectively protect intellectual property rights of producers and easily and accurately determine a counterfeit.

## Description

### CLAIM FOR PRIORITY

This application claims priority to Korean Patent Application No. 10-2013-0122338 filed on October 15, 2013 in the Korean Intellectual Property Office (KIPO), the entire contents of which are hereby incorporated by reference.

### BACKGROUND

### 1. Technical Field

Example embodiments of the present invention relate to genuine product certification technology, and more specifically, a device for determining a counterfeit in which genuine product certification that has been performed on a verification target product is verified to determine a counterfeit and a method thereof.

### 2. Related Art

Due to the development of science and technology, the spread of color copiers and color scanners and the development of 3D printers and scanners are underway. Therefore, the distribution of counterfeits in which product identification information such as a brand, a mark, a logo, and a hologram is copied and attached to products is increasing.

In particular, recently, mechanical and electronic components of vehicles and airplanes and hardware to be mounted in information and communication devices have been forged, and software such as applications and operating systems (OSs) implemented in electronic devices has been copied and distributed. Therefore, the field and scope of products to be forged are increasing.

According to the increase of the distribution and scope of counterfeits, products and machines mounting counterfeits instead of genuine products are increasingly produced. Accordingly, defects or malfunctions may occur in electronic products or machines, which may result in major accidents. Therefore, brand values and credibility of genuine products decrease, and consumers' purchasing desires decrease, which may cause tangible or intangible losses to producers.

Therefore, in order to prevent defects of products due to counterfeits and protect his or her intellectual property rights, producers and developers of products study methods of certifying a genuine product and apply the methods to products.

For example, in the related art, certification of whether a product is a genuine product was performed by communicating with a product having an electronic tag such as radio frequency identification (RFID) therein using a radio frequency (RF) reader having a wireless communication function.

However, such genuine product certification technology necessarily requires the RF reader capable of communicating with the RFID tag when users request genuine product certification. Therefore, there is a limitation that it is impossible to satisfy users' demand for genuine product certification in real time.

Therefore, technology in which unique identification information of products such as a serial number is input to applications implemented in mobile communication terminals such as smartphones, tablet PCs, and personal digital assistants (PDAs) and servers connected to mobile communication terminals to verify forgery was proposed.

However, such genuine product certification technology has a problem in that, when certification information used for genuine product certification is copied and genuine product certification of counterfeits is performed, the counterfeits may be recognized as genuine products.

### SUMMARY

Example embodiments of the present invention provide a device for determining a counterfeit that can easily determine a counterfeit by verifying genuine product certification performed in a device for performing genuine product certification that performs genuine product certification based on certification identification information of a verification target product.

Example embodiments of the present invention also provide a method of determining a counterfeit that can accurately determine a counterfeit by analyzing genuine product certification of a verification target product based on state information of a device for performing genuine product certification that performs genuine product certification.

In some example embodiments, a device for determining a counterfeit includes a certification information receiving unit configured to receive certification identification information including at least one piece of certification chip identification information, product identification information, and certification verification information of a verification target product and state information of a device for performing genuine product certification from the device for performing genuine product certification; and a counterfeit determining unit configured to determine a counterfeit by verifying genuine product certification of the verification target product performed in the device for performing genuine product certification based on the certification identification information received from the certification information receiving unit or the state information of the device for performing genuine product certification.

The device for performing genuine product certification may perform genuine product certification on the verification target product using the certification identification information of the verification target product according to a request from the verification target product.

The counterfeit determining unit may receive genuine product certification information including at least one piece of certification chip identification information, product identification information, and certification verification information assigned to a genuine product of the verification target product from a certification information registering device, compare the genuine product certification information and the certification identification information, and verify validity of the certification identification information to determine a counterfeit.

The certification information registering device may be a server managed by an organization that assigns certification to the verification target product.

The counterfeit determining unit may generate certification performing history information by mapping it with the state information of the device for performing genuine product certification corresponding to the certification identification information.

The state information of the device for performing genuine product certification may include at least one of a performing time and a performing position at which genuine product certification of the verification target product is performed in at least one device for performing genuine product certification and identification information of the device for performing genuine product certification that performs genuine product certification.

The counterfeit determining unit may determine a counterfeit by analyzing a distance difference between performing positions at which genuine product certification is performed with respect to a time difference between performing times at which genuine product certification is performed on the verification target product based on the generated certification performing history information.

In other example embodiments, a method of determining a counterfeit includes receiving certification identification information including at least one piece of certification chip identification information, product identification information, and certification verification information of a verification target product and state information of a device for performing genuine product certification from the device for performing genuine product certification; and determining a counterfeit by verifying genuine product certification of the verification target product performed in the device for performing genuine product certification based on the certification identification information received from the certification information receiving unit or state information of the device for performing genuine product certification.

In the determining of the counterfeit, genuine product certification information including at least one piece of certification chip identification information, product identification information, and certification verification information assigned to a genuine product of the verification target product may be received from a certification information registering device, the genuine product certification information and the certification identification information may be compared, and validity of the certification identification information may be verified to determine a counterfeit.

In the determining of the counterfeit, certification performing history information may be generated by mapping it with state information of the device for performing genuine product certification corresponding to the certification identification information, and a counterfeit may be determined by analyzing a distance difference between performing positions at which genuine product certification is performed with respect to a time difference between performing times at which genuine product certification is performed on the verification target product based on the generated certification performing history information.

### BRIEF DESCRIPTION OF DRAWINGS

Example embodiments of the present invention will become more apparent by describing in detail example embodiments of the present invention with reference to the accompanying drawings, in which:
FIG. 1 is a diagram illustrating an exemplary environment in which a device for determining a counterfeit and a method thereof according to an embodiment of the present invention are used;
FIG. 2 is a block diagram illustrating a device for determining a counterfeit according to an embodiment of the present invention;
FIG. 3 is a flowchart illustrating a method of determining a counterfeit according to an embodiment of the present invention;
FIG. 4 is a diagram illustrating an exemplary operation of determining a counterfeit by comparing genuine product certification information and certification identification information according to an embodiment of the present invention;
FIG. 5 is a flowchart illustrating operations of generating certification performing history information and determining a counterfeit according to an embodiment of the present invention;
FIG. 6 is a diagram illustrating exemplary certification performing history information according to an embodiment of the present invention; and
FIG. 7 is a diagram illustrating an exemplary operation of determining a counterfeit by analyzing certification performing history information according to an embodiment of the present invention.

### DESCRIPTION OF EXAMPLE EMBODIMENTS

While the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the spirit and scope of the invention. Like numbers refer to like elements throughout the description of the figures.

It will be understood that, although the terms "first," "second," etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present invention will be described in detail with reference to the accompanying drawings.

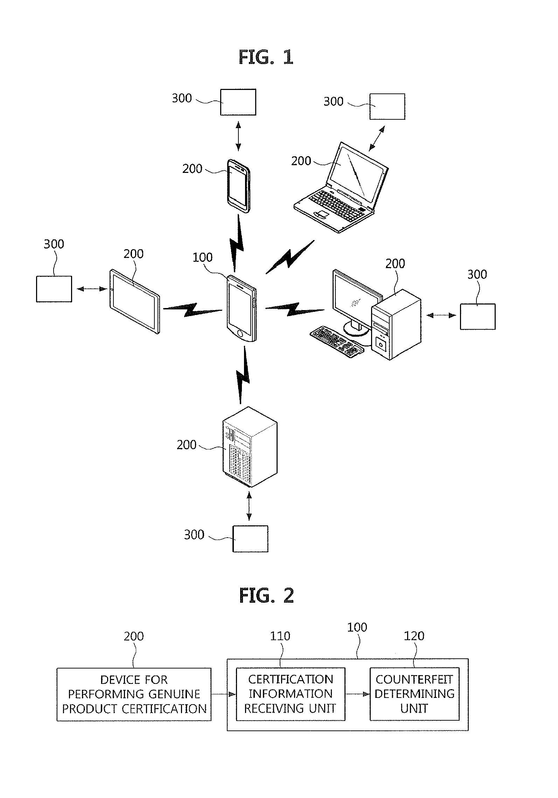

FIG. 1 is a diagram illustrating an exemplary environment in which a device for determining a counterfeit and a method thereof according to an embodiment of the present invention are used.

As illustrated in FIG. 1, a device for determining a counterfeit and a method thereof may include a device for performing genuine product certification 200 that performs genuine product certification on a verification target product 300.

Here, the verification target product 300 may include products having identification information such as a brand, a mark, a logo, and a hologram attached thereon, products having an electronic tag such as a near field communication (NFC) tag or a radio frequency identification (RFID) tag embedded therein, hardware of information processing devices, and software such as operating systems (OSs) or applications implemented in information processing devices, but the present invention is not limited thereto and may include any product that can be produced by intellectual activities of producers and developers.

A device for determining a counterfeit 100 may include an information processing device such as a smartphone, a tablet PC, a personal digital assistant (PDA), a notebook, and a computer that has a communication device for exchanging information with at least one device for performing genuine product certification 200 and an information processing function for processing information input from the communication device, but the present invention is not limited thereto.

Here, the device for performing genuine product certification 200 may include an information processing device such as a smartphone, a tablet PC, a PDA, a notebook, and a computer that has an NFC function for communicating with the verification target product 300 having an electronic tag such as an NFC tag and an RFID tag therein, receives the certification identification information from the verification target product 300, and may perform genuine product certification using the received certification information, but the present invention is not limited thereto.

The device for determining a counterfeit 100 and the device for performing genuine product certification 200 may be directly connected to each other and implemented in a single device, or each may be implemented in a separate device and exchange certification information of the verification target product 300 via a wired and/or wireless network such as NFC, a serial network, USB, Bluetooth, WiFi, 3Generation (3G), and Long Term Evolution (LTE).

FIG. 2 is a block diagram illustrating a device for determining a counterfeit according to an embodiment of the present invention.

As illustrated in FIG. 2, the device for determining a counterfeit 100 may include a certification information receiving unit 110 and a counterfeit determining unit 120.

The device for determining a counterfeit 100 and at least one device for performing genuine product certification 200 that performs genuine product certification on a plurality of verification target products 300 may be connected to each other and implemented in a single device or each may be implemented in a separate device.

Here, according to a request from a user who possesses the verification target product 300, the device for performing genuine product certification 200 receives at least one piece of certification chip identification information of a genuine product certification chip embedded in the verification target product 300, and product identification information and certification verification information of the verification target product 300, and may perform genuine product certification on the verification target product 300.

The certification information receiving unit 110 may receive the certification identification information including at least one piece of the certification chip identification information, the product identification information, and the certification verification information of the verification target product 300 from the device for performing genuine product certification 200.

Here, the certification chip identification information may refer to unique identification information such as a unique identification (ID) or a serial number assigned to a micro certification chip embedded in the verification target product 300.

The product identification information may include unique information that can be used to identify a product such as a classification code, a production date, and production area information of a product, and an ID and a serial number of a product in a certification chip embedded in the verification target product 300, but the present invention is not limited thereto.

In addition, the certification verification information is information used for verifying whether the integrity of the certification chip identification information and the product identification information is guaranteed, and may include a public key certificate including identification information such as an accredited certificate, an electronic signature, or a password, but the present invention is not limited thereto.

In this case, the certification identification information including at least one piece of the certification chip identification information, the product identification information, and the certification verification information of the verification target product 300 may be preset by certification chip producers who produce a certification chip of the verification target product 300 or producers who produce a product, or may be issued in advance by a certification information registering device (not illustrated in FIG. 2).

The certification information registering device may refer to a certification server that is managed by a public certificate authority that assigns genuine product certification information to the verification target product 300, but the present invention is not limited thereto.

Here, the genuine product certification information may include at least one piece of the certification chip identification information, the product identification information, and the certification verification information, which have been issued by the certification information registering device to a genuine product.

The certification information receiving unit 110 may receive state information of the device for performing genuine product certification 200 that performs genuine product certification on the verification target product from the device for performing genuine product certification 200.

The state information of the device for performing genuine product certification 200 may include at least one of a performing time and a performing position at which at least one device for performing genuine product certification 200 performs genuine product certification on the verification target product 300, and identification information of the device for performing genuine product certification that performs genuine product certification.

Therefore, the certification information receiving unit 110 may receive identification information of the device for performing genuine product certification 200 including a unique ID or an Internet protocol (IP) address that can identify the device for performing genuine product certification 200, and a performing time or a performing position at which genuine product certification of the verification target product 300 is performed and that is extracted from a timer or a global positioning system (GPS) provided in the device for performing genuine product certification 200.

In this case, the state information of the device for performing genuine product certification is received. This is because the plurality of devices for performing genuine product certification 200 can certify a plurality of verification target products on which genuine product certification is performed as a genuine product using the same certification identification information.

Based on the certification identification information received from the certification information receiving unit 110 and the state information of the device for performing genuine product certification, the counterfeit determining unit 120 may determine a counterfeit by verifying genuine product certification of the verification target product performed in the device for performing genuine product certification 200.

First, the counterfeit determining unit 120 receives the genuine product certification information from the certification information registering device in order to determine a counterfeit, compares the received genuine product certification information with the certification identification information, and may verify validity of the certification identification information.

For example, when the product identification information of the verification target product 300 is managed by the counterfeit determining unit 120, the received product identification information and the product identification information of the genuine product certification information issued to a genuine product by the certification information registering device are compared, and validity of the product identification information is verified. Therefore, it is possible to determine whether the verification target product 300 is a counterfeit.

In addition, when the counterfeit determining unit 120 receives the certification verification information of the verification target product 300, the received certification verification information and the certification verification information of the genuine product certification information issued to a genuine product by the certification information registering device are compared, and validity of the certification verification information is verified. Therefore, it is possible to determine whether the verification target product 300 is a counterfeit.

That is, although the device for performing genuine product certification 200 uses the certification verification information and determines that the verification target product 300 is a genuine product, when the counterfeit determining unit 120 verifies that validity of the certification verification information is damaged, the verification target product 300 may be determined as a counterfeit.

On the other hand, when the product identification information of the verification target product 300 is not managed by the counterfeit determining unit 120, it is verified whether the certification chip identification information and the certification verification information of the verification target product 300 received from the device for performing genuine product certification 200 are the same as the certification chip identification information and the certification verification information of the genuine product certification information issued to a genuine product by the certification information registering device. Therefore, it is possible to determine whether the verification target product 300 is a counterfeit.

In addition, the counterfeit determining unit 120 checks a verification history in which genuine product certification is verified using a combination of the certification chip identification information and the product identification information of the verification target product 300, and verifies whether the combination of the certification chip identification information and the product identification information of the verification target product 300 is the same as a combination of the certification chip identification information and the product identification information of the verification target product 300 included in the verification history. Therefore, it is possible to determine whether the verification target product 300 is a counterfeit.

The counterfeit determining unit 120 generates certification performing history information by mapping it with the state information of the device for performing genuine product certification 200 corresponding to the certification identification information. Therefore, it is possible to verify genuine product certification of the verification target product performed by the device for performing genuine product certification 200.

Specifically, for example, The counterfeit determining unit 120 may map the certification identification information including at least one piece of the certification chip identification information, the product identification information, and the certification verification information of the verification target product to a performing time and a performing position at which genuine product certification of the verification target product is performed and identification information, and generate a certification performing history information of each verification target product.

Therefore, based on the certification performing history information, with respect to a time difference between performing times at which genuine product certification of the verification target product is performed, a distance difference between performing positions at which genuine product certification is performed is analyzed. Therefore, it is possible to determine a counterfeit.

For example, when a plurality of genuine product certifications are performed on the verification target product using the same certification identification information by the device for performing genuine product certification 200, a time difference between performing times at which genuine product certification is performed and a distance difference between performing positions at which genuine product certification is performed are calculated in a plurality of pieces of generated certification performing history information, and it is determined whether a distance movement corresponds to a performing time difference. Therefore, it is possible to determine whether the verification target product is a counterfeit.

In addition, when genuine product certification is performed on the verification target product using the same certification identification information by a plurality of different devices for performing genuine product certification 200, a time difference between performing times at which genuine product certification is performed and a distance difference between performing positions at which genuine product certification is performed are calculated in a plurality of pieces of generated certification performing history information, and it is determined whether a distance movement corresponds to a performing time difference. Therefore, it is possible to determine whether the verification target product is a counterfeit.

In addition, when the counterfeit determining unit 120 informs a user who possesses a genuine product of the verification target product 300 of an attempt of genuine product certification of the possessed verification target product 300, the user of the genuine product determines whether genuine product certification of the verification target product 300 is inappropriately attempted, and provides the result to the device for determining a counterfeit 100. Therefore, it is possible to determine whether the verification target product 300 is a counterfeit.

Accordingly, the counterfeit determining unit 120 may include computation resources such as central processing units (CPUs) or graphic processing units (GPUs) that can compare the certification identification information and the genuine product certification information received from the certification information registering device, calculate a time difference between performing times at which genuine product certification is performed and a distance difference between performing positions at which genuine product certification is performed, and analyze the calculated information, but the present invention is not limited thereto.

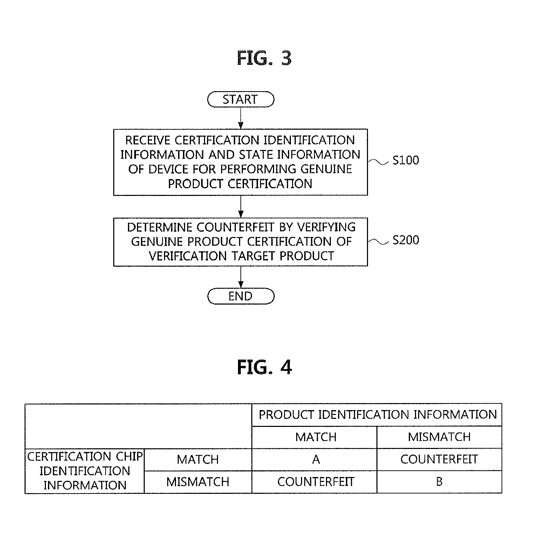

FIG. 3 is a flowchart illustrating a method of determining a counterfeit according to an embodiment of the present invention. FIG. 4 is a diagram illustrating an exemplary operation of determining a counterfeit by comparing the genuine product certification information and the certification identification information according to an embodiment of the present invention.

As illustrated in FIGS. 3 and 4, the method of determining a counterfeit may include an operation (S100) of receiving certification identification information of a verification target product or state information of a device for performing genuine product certification, and an operation (S200) of determining a counterfeit by verifying genuine product certification performed on the verification target product.

The method of determining a counterfeit may be performed by the device for determining a counterfeit 100 that determines a counterfeit of the verification target product.

Here, the device for determining a counterfeit 100 may be directly connected to or may be connected via a wired and/or wireless network to the device for performing genuine product certification 200 that performs genuine product certification on the verification target product 300, and verify genuine product certification of the verification target product 300 performed by the device for performing genuine product certification 200.

In addition, according to a request from a user who possesses the verification target product 300, the device for performing genuine product certification 200 receives at least one piece of the certification chip identification information of a genuine product certification chip embedded in the verification target product 300, and the product identification information and the certification verification information of the verification target product 300, and may perform genuine product certification on the verification target product 300.

The certification identification information of the verification target product 300 may be received from the device for performing genuine product certification 200 (S100).

In this case, the certification identification information of the verification target product may include at least one piece of the certification chip identification information, the product identification information, and the certification verification information of the verification target product 300 recorded in an electronic tag such as an NFC tag or an RFID tag.

The certification chip identification information may refer to unique identification information such as a unique identification (ID) or a serial number assigned to a micro certification chip embedded in the verification target product 300.

The product identification information may include unique information that can be used to identify a product such as a classification code, a production date, and production area information of a product, and an ID and a serial number of a product in a certification chip embedded in the verification target product 300, but the present invention is not limited thereto.

In addition, the certification verification information is information used for verifying whether the integrity of the certification chip identification information and the product identification information is guaranteed, and may include a public key certificate including identification information such as an accredited certificate, an electronic signature, or a password, but the present invention is not limited thereto.

The certification identification information including at least one piece of the certification chip identification information, the product identification information, and the certification verification information of the verification target product 300 may be preset by certification chip producers who produce a certification chip of the verification target product 300 or producers who produce a product, or may be issued in advance by a certification information registering device

The certification information registering device may refer to a certification server that is managed by a public certificate authority that assigns genuine product certification information to the verification target product 300, but the present invention is not limited thereto.

Here, the genuine product certification information may include at least one piece of the certification chip identification information, the product identification information, and the certification verification information that has been issued by the certification information registering device to a genuine product.

The state information of the device for performing genuine product certification may be received from the device for performing genuine product certification 200 (S100).

The state information of the device for performing genuine product certification may include at least one of a performing time and a performing position at which at least one device for performing genuine product certification 200 performs genuine product certification on the verification target product 300, and identification information of the device for performing genuine product certification that performs genuine product certification.

For example, identification information of the device for performing genuine product certification including a unique ID or an Internet protocol (IP) address that can identify the device for performing genuine product certification 200, and a performing time or a performing position at which genuine product certification of the verification target product is performed and that is extracted from a timer and a global positioning system (GPS) provided in the device for performing genuine product certification may be received.

In this case, the state information of the device for performing genuine product certification is received. This is because the plurality of devices for performing genuine product certification 200 can certify a plurality of verification target products on which genuine product certification is performed as a genuine product using the same certification identification information.

Specifically, genuine product certification may be performed on the verification target product using the same certification identification information several times by the same device for performing genuine product certification, and genuine product certification may be performed on the verification target product using the same certification identification information several times by different devices for performing genuine product certification.

Based on the certification identification information received from the certification information receiving unit 110 and the state information of the device for performing genuine product certification, genuine product certification of the verification target product performed in the device for performing genuine product certification 200 is verified. Therefore, it is possible to determine a counterfeit (S200).

First, the genuine product certification information is received from the certification information registering device, the received genuine product certification information and the certification identification information are compared, and validity of the certification identification information is verified. Therefore, it is possible to determine a counterfeit.

For example, when the product identification information of the verification target product 300 is managed by the device for determining a counterfeit 100, the received product identification information and the product identification information of the genuine product certification information issued to a genuine product by the certification information registering device are compared, and validity of the product identification information is verified. Therefore, it is possible to determine whether the verification target product 300 is a counterfeit.

In addition, when the device for determining a counterfeit 100 receives the certification verification information of the verification target product 300, the received certification verification information and the certification verification information of the genuine product certification information issued to a genuine product by the certification information registering device are compared, and validity of the certification verification information is verified. Therefore, it is possible to determine whether the verification target product 300 is a counterfeit.

That is, although the device for performing genuine product certification 200 uses the certification verification information and determines that the verification target product 300 is a genuine product, when the device for determining a counterfeit 100 verifies that validity of the certification verification information is damaged, the verification target product 300 may be determined as a counterfeit.

On the other hand, when the product identification information of the verification target product 300 is not managed by the device for determining a counterfeit 100, the genuine product certification information and the certification identification information are compared as illustrated in FIG. 4. Therefore, it is possible to determine a counterfeit.

In this case, when the genuine product certification information recorded in advance in the certification information registering device matches the certification chip identification information of the verification target product but the product identification information mismatches or when the genuine product certification information recorded in advance in the certification information registering device matches the product identification information of the verification target product but the certification chip identification information mismatches, a corresponding verification target product may be determined as a counterfeit.

In addition, even when the genuine product certification information, and the certification chip identification information and the product identification information of the verification target product match (A), the verification target product may be determined as a counterfeit. In this case, even when the certification chip identification information and the product identification information match, the verification target product is determined as a counterfeit. This is because the genuine product certification information may be copied and used as the certification identification information of the counterfeit.

On the other hand, when the genuine product certification information and the certification chip identification information and the product identification information of the verification target product mismatch (B), since it may be a different verification target product, the product may not be determined as a counterfeit.

In addition, it is checked whether a verification history in which genuine product certification is verified using a combination of the certification chip identification information and the product identification information of the verification target product 300 is in the device for determining a counterfeit 100, and it is verified whether the combination of the certification chip identification information and the product identification information of the verification target product 300 is the same as a combination of the certification chip identification information and the product identification information of the verification target product 300 included in the verification history. Therefore, it is possible to determine whether the verification target product 300 is a counterfeit.

Certification performing history information is generated by mapping it with the state information of the device for performing genuine product certification corresponding to the certification identification information. Based on the generated certification performing history information, genuine product certification of the verification target product performed in the device for performing genuine product certification is verified. Therefore, it is possible to determine a counterfeit.

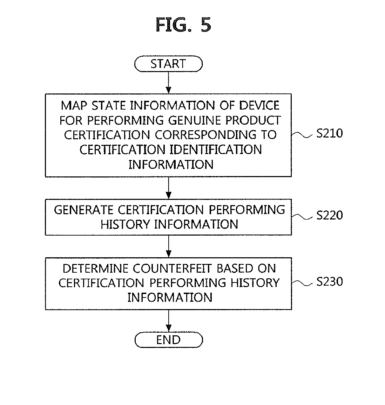

Determination of a counterfeit based on certification performing history information will be described in detail below with reference to FIGS. 5 to 7 according to the present invention.

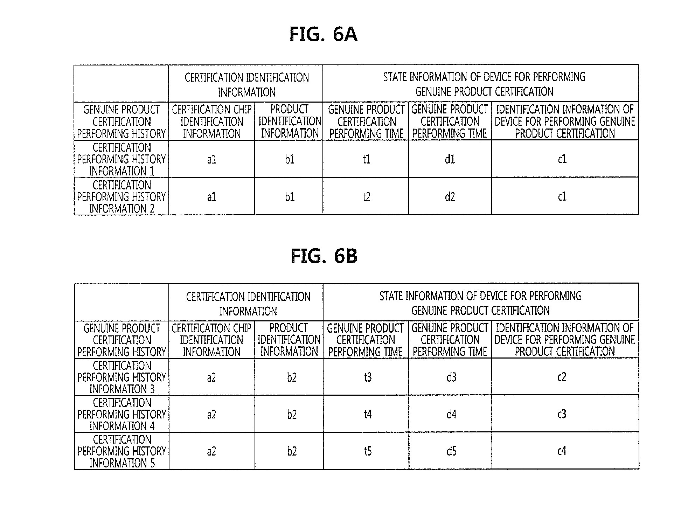

FIG. 5 is a flowchart illustrating operations of generating certification performing history information and determining a counterfeit according to an embodiment of the present invention. FIG. 6 is a diagram illustrating exemplary certification performing history information according to an embodiment of the present invention.

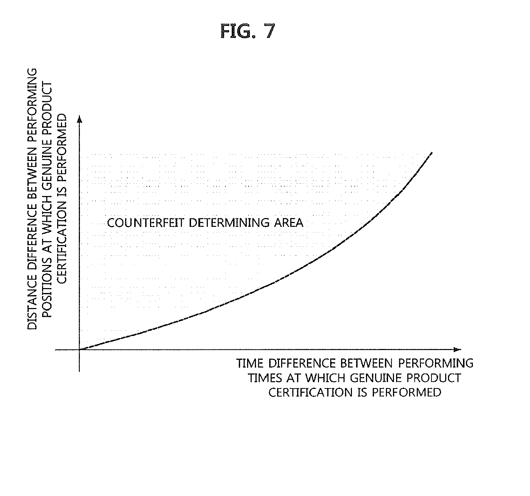

In addition, FIG. 7 is a diagram illustrating an exemplary operation of determining a counterfeit by analyzing certification performing history information according to an embodiment of the present invention.

As illustrated in FIGS. 5 to 7, state information of the device for performing genuine product certification corresponding to the certification identification information is mapped (S210), certification performing history information is generated (S220), and a counterfeit may be determined based on the generated certification performing history information (S230).

For example, as illustrated in FIG. 6A, genuine product certification may be performed on the verification target product using the same certification identification information several times by a single device for performing genuine product certification, and a plurality of pieces of certification performing history information may be generated.

In this case, certification performing history information 1 may be generated by mapping certification chip identification information al and product identification information b1 of the verification target product to a performing time t1 and a performing position d1 at which genuine product certification is performed and an identification number c1 of the device for performing genuine product certification.

In addition, certification performing history information 2 may be generated by mapping the certification chip identification information a1 and the product identification information b1 of the verification target product to a performing time t2 and a performing position d2 at which genuine product certification is performed and an identification number c1 of the device for performing genuine product certification.

Therefore, a time difference (t2-t1) between the performing time t1 of the certification performing history information 1 and the performing time t2 of the certification performing history information 2, and a distance difference (d2-d1) between the performing position d1 of the certification performing history information 1 and the performing position d2 of the certification performing history information 2 may be calculated.

When the time difference (t2-t1) between performing times at which genuine product certification is performed is one minute, but the distance difference (d2-d1) between performing positions at which genuine product certification is performed is 1000 km, a distance movement according to the performing time difference is unrealistic, thus, the verification target product may be determined as a counterfeit.

Therefore, it is analyzed whether the distance difference (d2-d1) between performing positions corresponds to the time difference (t2-t1) between performing times. As illustrated in FIG. 7, when the analysis result is positioned in a counterfeit determining area, the verification target product may be determined as a counterfeit.

As illustrated in FIG. 6B, genuine product certification is performed on the verification target product using the same certification identification information by the plurality of devices for performing genuine product certification. Therefore, a plurality of pieces of certification performing history information may be generated.

For example, certification performing history information 3 may be generated by mapping certification chip identification information a2 and product identification information b2 of the verification target product to a performing time t3 and a performing position d3 at which genuine product certification is performed and an identification number c2 of the device for performing genuine product certification. Certification performing history information 4 may be generated by mapping the certification chip identification information a2 and the product identification information b2 of the verification target product to a performing time t4 and a performing position d4 at which genuine product certification is performed and an identification number c3 of the device for performing genuine product certification.

In addition, certification performing history information 5 may be generated by mapping the certification chip identification information a2 and the product identification information b2 of the verification target product to a performing time t5 and a performing position d5 at which genuine product certification is performed and an identification number c4 of the device for performing genuine product certification.

Therefore, a time difference (t4-t3) between the performing time t3 of the certification performing history information 3 and the performing time t4 of the certification performing history information 4, and a distance difference (d4-d3) between the performing position d3 of the certification performing history information 3 and the performing position d4 of the certification performing history information 4 are calculated. It is analyzed whether the distance difference (d4-d3) between performing positions corresponds to the time difference (t4-t3) between performing times. Therefore, it is possible to determine a counterfeit.

For example, with respect to a time difference among performing times of the certification performing history information 3, the certification performing history information 4, and the certification performing history information 5, a distance difference among performing positions is analyzed. As illustrated in FIG. 7, when the analysis result is positioned in a counterfeit determining area, the verification target product may be determined as a counterfeit.

According to the above-described device for determining a counterfeit and method thereof according to the embodiments of the present invention, genuine product certification performed in the device for performing genuine product certification that performs genuine product certification is verified based on the certification identification information of the verification target product. Therefore, it is possible to easily determine a counterfeit.

In addition, genuine product certification of the verification target product is analyzed based on the state information of the device for performing genuine product certification that performs genuine product certification. Therefore, it is possible to accurately determine a counterfeit and effectively protect intellectual property rights of producers.

According to the above-described device for determining a counterfeit and method thereof according to the embodiments of the present invention, genuine product certification performed in the device for performing genuine product certification that performs genuine product certification is verified based on the certification identification information of the verification target product. Therefore, it is possible to easily determine a counterfeit.

In addition, genuine product certification of the verification target product is analyzed based on the state information of the device for performing genuine product certification that performs genuine product certification. Therefore, it is possible to accurately determine a counterfeit and effectively protect intellectual property rights of producers.

While the example embodiments of the present invention and their advantages have been described above in detail, it should be understood that various changes, substitutions and alterations may be made herein without departing from the scope of the invention as defined by the following claims.

## Claims

1. A device for determining a counterfeit, comprising:
a certification information receiving unit configured to receive certification identification information including at least one piece of certification chip identification information, product identification information, and certification verification information of a verification target product and state information of a device for performing genuine product certification from the device for performing genuine product certification; and
a counterfeit determining unit configured to determine a counterfeit by verifying genuine product certification of the verification target product performed in the device for performing genuine product certification based on the certification identification information received from the certification information receiving unit or the state information of the device for performing genuine product certification.

2. . The device of claim 1,
wherein the device for performing genuine product certification performs genuine product certification on the verification target product using the certification identification information of the verification target product according to a request from the verification target product.

3. . The device of claim 1,
wherein the counterfeit determining unit receives genuine product certification information including at least one piece of certification chip identification information, product identification information, and certification verification information assigned to a genuine product of the verification target product from a certification information registering device, compares the genuine product certification information and the certification identification information, and verifies validity of the certification identification information to determine a counterfeit.

4. . The device of claim 3,
wherein the certification information registering device is a server managed by an organization that assigns certification to the verification target product.

5. . The device of claim 1,
wherein the counterfeit determining unit generates certification performing history information by mapping it with the state information of the device for performing genuine product certification corresponding to the certification identification information.

6. . The device of claim 5,
wherein the state information of the device for performing genuine product certification includes at least one of a performing time and a performing position at which genuine product certification of the verification target product is performed in at least one device for performing genuine product certification and identification information of the device for performing genuine product certification that performs genuine product certification.

7. . The device of claim 6,
wherein the counterfeit determining unit determines a counterfeit by analyzing a distance difference between performing positions at which genuine product certification is performed with respect to a time difference between performing times at which genuine product certification is performed on the verification target product based on the generated certification performing history information.

8. . A method of determining a counterfeit that is performed by a device for determining a counterfeit for a verification target product, the method comprising:
receiving certification identification information including at least one piece of certification chip identification information, product identification information, and certification verification information of a verification target product and state information of a device for performing genuine product certification from the device for performing genuine product certification; and
determining a counterfeit by verifying genuine product certification of the verification target product performed in the device for performing genuine product certification based on the received certification identification information or the state information of the device for performing genuine product certification.

9. . The method of claim 8,
wherein the device for performing genuine product certification performs genuine product certification on the verification target product using the certification identification information of the verification target product according to a request from the verification target product.

10. . The method of claim 8,
wherein, in the determining of the counterfeit,
genuine product certification information including at least one piece of certification chip identification information, product identification information, and certification verification information assigned to a genuine product of the verification target product is received from a certification information registering device, the genuine product certification information and the certification identification information are compared, and validity of the certification identification information is verified to determine a counterfeit.

11. . The method of claim 10,
wherein the certification information registering device is a server managed by an organization that assigns certification to the verification target product.

12. . The method of claim 10,
wherein, in the determining of the counterfeit,
when product identification information of the verification target product is managed by the device for determining a counterfeit, product identification information of the verification target product and product identification information of the genuine product certification information are compared, and validity of product identification information of the verification target product is verified to determine a counterfeit, and
when product identification information of the verification target product is not managed by the device for determining a counterfeit, the certification chip identification information and the certification verification information of the verification target product and certification chip identification information and certification verification information of the genuine product certification information are compared, and validity of certification chip identification information and the certification verification information of the verification target product is verified to determine a counterfeit.

13. . The method of claim 12,
wherein, in the determining of the counterfeit,
when product identification information of the verification target product is not managed by the device for determining a counterfeit, it is checked whether a verification history in which genuine product certification is verified using a combination of the certification chip identification information and the product identification information of the verification target product is in the device for determining a counterfeit, and it is verified whether the combination of the certification chip identification information and the product identification information of the verification target product is the same as a combination of the certification chip identification information and the product identification information of the verification target product included in the verification history to determine a counterfeit.

14. . The method of claim 10,
wherein, in the determining of the counterfeit,
when the certification verification information of the verification target product is received, the received certification verification information of the verification target product and the certification verification information of the genuine product certification information are compared, and validity of the certification verification information of the verification target product is verified to determine a counterfeit.

15. . The method of claim 8,
wherein, in the determining of the counterfeit,
certification performing history information is generated by mapping it with state information of the device for performing genuine product certification corresponding to the certification identification information.

16. . The method of claim 15,
wherein the state information of the device for performing genuine product certification includes at least one of a performing time and a performing position at which genuine product certification of the verification target product is performed in at least one device for performing genuine product certification and identification information of the device for performing genuine product certification that performs genuine product certification.

17. . The method of claim 15,
wherein, in the determining of the counterfeit,
a counterfeit is determined by analyzing a distance difference between performing positions at which genuine product certification is performed with respect to a time difference between performing times at which genuine product certification is performed on the verification target product based on the generated certification performing history information.
